# EUROPEAN PATENT SPECIFICATION

(11) **EP 2 175 612 B1**
(45) Date of publication and mention of the grant of the patent: **02.11.2016**
(21) Application number: 09158864.0
(22) Date of filing: 27.04.2009
(51) Int. Cl.: H04L 29/08

(54) **Mobile wireless communications system providing downloading and installation of mobile device applications upon registration and related methods**
Das Herunterladen und Installieren von Mobilvorrichtungsanwendungen nach der Registrierung bereitstellendes mobiles drahtloses Kommunikationssystem und zugehörige Verfahren
Système de communications sans fil mobile permettant le téléchargement et installation d'applications de dispositif mobile au moment de l'inscription et procédés correspondants

(30) Priority: 08.10.2008 US 103747 P
(43) Date of publication of application: 14.04.2010
(73) Proprietor: BlackBerry Limited, Waterloo, ON N2K 0A7 (CA)
(72) Inventor: Stoev, Orlin Vesselinov, Waterloo Ontario N2L 3W8 (CA); Brown, Michael W., Waterloo Ontario N2L 3W8 (CA)
(74) Representative: Fennell, Gareth Charles

(56) References cited:
- WO-A-2009/032853
- US-A1- 2005 079 863
- APPLE: "iPhone 3G user manual" 20080711, [Online] 11 July 2008 (2008-07-11), pages 1-154, XP007907619 Retrieved from the Internet: URL:http://manuals.info.apple.com/en_US/iP hone_User_Guide.pdf>

## Description

### Related Application

This application is based upon prior filed copending provisional application Serial No. 61/103,747 filed October 8, 2008.

### Field of the Invention

The present disclosure relates to the field of communications systems, and, more particularly, to mobile wireless communications systems and related methods.

### Background

Mobile wireless communications systems continue to grow in popularity and have become an integral part of both personal and business communications. By way of example, cellular telephones allow users to place and receive voice calls most anywhere they travel. Moreover, as cellular telephone technology has increased, so too has the functionality of cellular devices and the different types of devices available to users. For example, many cellular or wi-fi devices now incorporate personal digital assistant (PDA) features such as calendars, address books, task lists, etc. Moreover, such multi-function or "smart" devices may also allow users to wirelessly send and receive electronic mail (email) messages and access the Internet via a cellular network and/or a wireless local area network (WLAN), for example.

Mobile devices such as smart phones are also capable of running relatively sophisticated applications, such as games, document processing applications, chat or instant messaging applications, etc. As a result, it may be desirable to provide enhanced approaches for accessing and managing applications for mobile devices, especially as new applications continue to be developed and become available.

US 2005/079863 is directed to techniques and systems for providing services to a mobile device to allow settings on the mobile device to be provisioned over the air. In response to a request for mobile service subscription options received from the mobile device, data relating to mobile service subscription options, for selection by a user of the mobile device, may be sent to the mobile device over a wireless communication path. A selection of one or more subscription options may be received from the mobile device over the wireless communication path, and a service corresponding to the selected subscription options may be activated in response to the selection. Settings associated with the selected subscription options may be downloaded over the air to the mobile device, which may store the settings to enable the mobile device to access the subscription.

US 2008/189169 is directed to an iPhone User Guide that discusses the following topics: Getting Started; Basics; Phone; Mail; Safari; iPod; More Applications; Settings; and iTunes and App Store.

The present invention is set out in the independent claims, with some optional features set out in the clams dependent thereto.

### Brief Description of the Drawings

For a better understanding of the various embodiments described herein and to show more clearly how they may be carried into effect, reference will now be made, by way of example only, to the accompanying drawings which show at least one example embodiment and in which:
FIG. 1 is a schematic block diagram of a mobile wireless communications system in accordance with one exemplary aspect;
FIGS. 2 and 3 are flow diagrams illustrating exemplary mobile wireless communications aspects;
FIGS. 4-12 are mobile wireless communications device screen shots illustrating non-mandatory mobile device application downloading and installation in accordance with exemplary embodiments;
FIG. 13 is a schematic block diagram of an exemplary embodiment of a mobile device that may be used with the system of FIG. 1;
FIG. 14 is a schematic block diagram of an exemplary embodiment of a communication subsystem component of the mobile device of FIG. 12;
FIG. 15 is a schematic block diagram of an exemplary node of a wireless communications network that may be used with the system of FIG. 1; and
FIG. 16 is a schematic block diagram illustrating components of a host system in one exemplary configuration for use with the wireless communications network of FIG. 14 and the mobile device of FIG. 12.

### Derailed Description of the Preferred Embodiments

The present description is made with reference to the accompanying drawings, in which preferred embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communication system is disclosed herein which may include an applications server configured to provide at least one mandatory mobile device application. The system may further include a mobile wireless communications device configured to initiate a registration request to register with a wireless communications network, and download and install the at least one mandatory mobile device application from the application server via the wireless communications network upon registration during background operation and without user prompting or user acceptance.

The mobile wireless communications device may be further configured to store an initial installation indicator for the at least one mandatory mobile device application. More particularly, the mobile wireless communications device may be further configured to determine if the initial installation indicator is stored prior to downloading and installing of the at least one mandatory mobile device applications. By way of example, the mobile wireless communications device may comprise a non-volatile memory configured to store the initial installation indicator.

The application server may also be configured to provide a plurality of non-mandatory mobile device applications for download by the mobile wireless communications device during foreground operation based upon user prompting and user acceptance. Additionally, the wireless communications network may comprise a cellular network, for example.

A mobile wireless communications device, such as the one briefly described above, and a related mobile wireless communications method are also provided. The method may include initiating a registration request to register a mobile wireless communications device with a wireless communications network. The method may further include downloading at least one mandatory mobile device application from an application server to the mobile wireless communications device via the wireless communications network, and installing the at least one mandatory mobile device application on the mobile wireless communications device, upon registration during background operation and without user prompting or user acceptance.

A related computer-readable medium is also provided which may have computer-executable instructions for causing a mobile wireless communications device to perform steps including: initiating a registration request to register with a wireless communications network; and downloading and installing at least one mandatory mobile device application from an application server via the wireless communications network upon registration during background operation and without user prompting or user acceptance.

By way of background, one potential problem with mobile device application provisioning is that of loading applications to a mobile wireless communications device (referred to herein as "devices" or "mobile devices") that were not available at the factory build time of the device, but are desired by network providers (e.g., cellular network carriers) to be installed on the device on initial startup and activation of the device. In some cases such applications may still be in the development stage by third party vendors at the time the mobile device is approved for factory build and shipping to carriers. The development and release of such applications may be complete before the actual device launch to the general market. Yet, carriers may want the ability to add applications to already manufactured devices on initial boot, for example, and to be able to dynamically control the list of the auto load applications, that is, mandatory or required applications that need to be installed on the device and which are not optional for the user,

Generally speaking, mandatory applications will be those types of applications that are to be available to all users, or are required for network/carrier compatibility, as opposed to optional applications that may be desirable by some users but not others. By way of example, mandatory applications may include application tools such as a "sound" application for setting device sound or alert preferences, a Bluetooth wireless device management application, etc. Optional applications may include instant messaging applications, social networking applications, etc., as will be discussed further below.

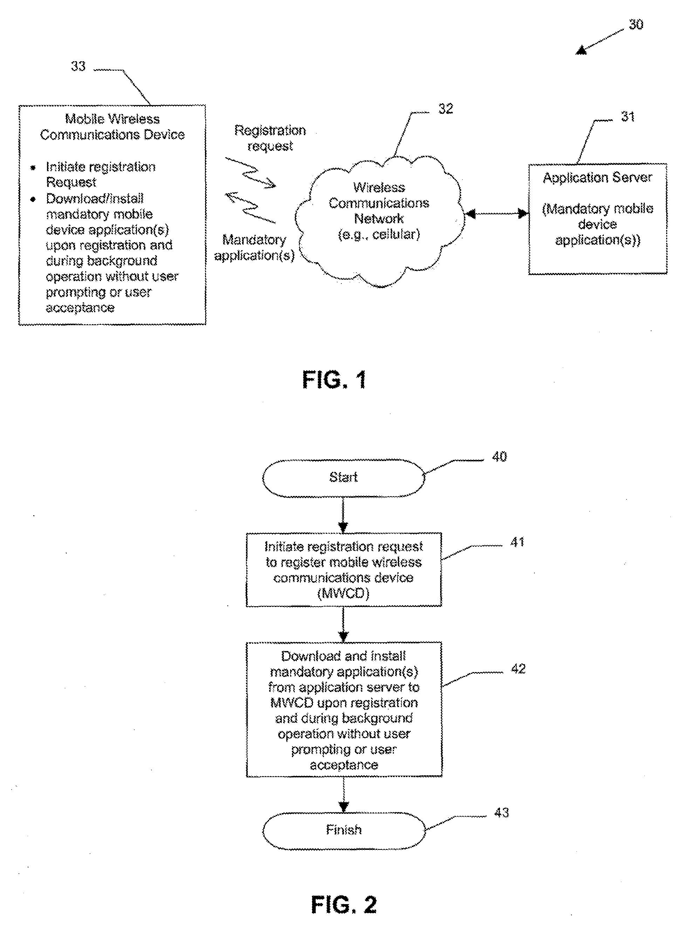

Referring initially to FIGS. 1 and 2, a mobile wireless communication system **30** and related method aspects for providing mobile device application download and installation features are first described. The system **30** illustratively includes an application server **31,** a wireless communications network **32,** and one or more mobile wireless communications devices **33.** The application server **31** is configured to provide one or more mandatory mobile device applications, Again, such applications may be unavailable at the time a new mobile wireless device model is shipped from the factory, but is subsequently completed and uploaded to the application server **31** prior to release or sale of the device model for use with a wireless communications network **32.** For example, in a cellular network application, the device manufacturer, third party application developed, or the cellular carrier may upload such mandatory programs to the application server **31** after a new device model is released for sale and use with the carrier's network, as will be appreciated by those skilled in the art. As used herein, the term "application server" is intended to included one or more computing devices that may work individually or in cooperation to provide application programs to mobile devices, as will be appreciated by those skilled in the art. In some embodiments, different application servers **31** may be used for different carriers, for example.

Beginning at Block **40,** the mobile device **33** is configured to initiate a registration request to register with the wireless communications network **32,** at Block **41.** For example, when a user obtains a new cellular device, the device typically has to be registered with the cellular network to enable it to send/receive voice and data communications. This may be done by calling a designated phone number from the device, which triggers the wireless communications network **32** to begin the registration process and register the device **33** to operate on the network. As part of the registration process, the mobile device **32** is prompted to download and install the mandatory mobile device application(s) from the application server **31** via the wireless communications network **32,** at Block **42,** thus concluding the method illustrated in FIG. 2 (Block **43**). In particular, this process may advantageously be carried out during background operation and without user prompting or user acceptance as an automatic or auto-loading process.

As used herein, "background operation" means that a given task may be performed by the mobile device 33 without providing any notification or prompting to the user, although in some embodiments a status notification letting the user know that a background installation is in process (and even an indication of what mandatory application is being installed) may be given. Moreover, during background operation a user may be able to use other applications in the foreground, but in some embodiments use of other applications during mandatory application downloading/installation may be temporarily prevented to avoid overtaxing the device processor or memory resources, as will be appreciated by those skilled in the art.

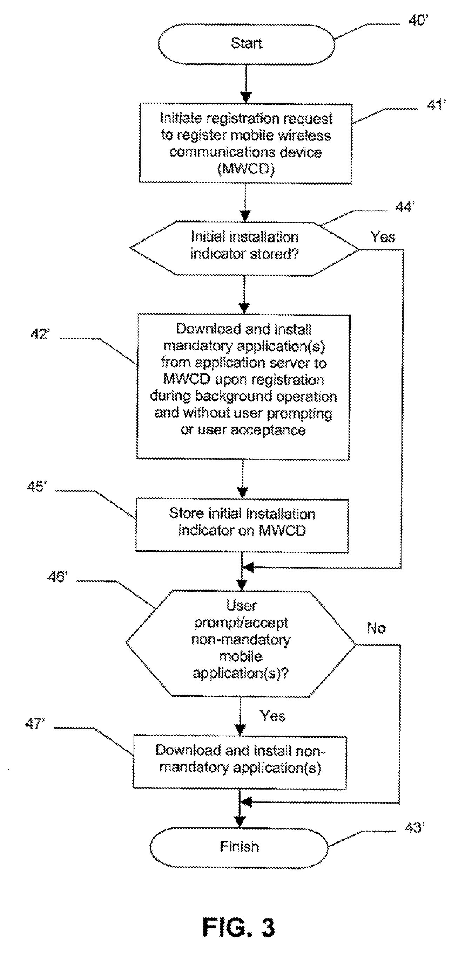

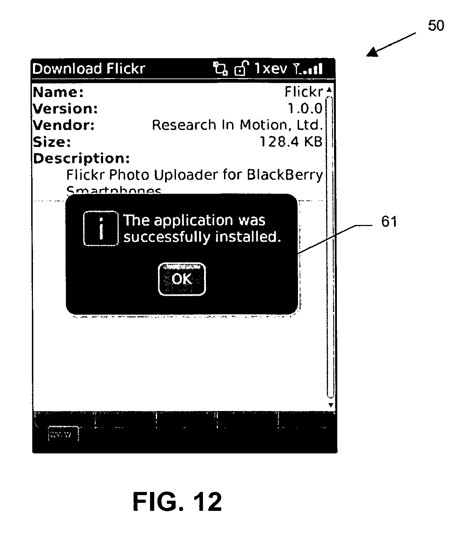

Referring additionally to FIG. 3, the mobile device **33** may be further configured to determine if an initial installation indicator for the mandatory mobile device application has been stored by the device, at Block **44'.** For example, the mobile device **33** may have a non-volatile memory (e.g., FLASH memory **108** in FIG. 12) which stores the initial installation indication after an initial installation has been performed, at Block **45',** The initial installation indication may be a flag set in the memory, for example, that informs the device processor (e.g., main processor **102,** FIG. 12) that the mobile device **33** has previously been registered and that a mandatory application(s) has already been downloaded based thereon. That is, the processor **102** may advantageously determine if the initial installation indicator or flag is stored or set prior to downloading and installing of a mandatory mobile device application. In such case, a subsequent download and install need not occur, as will be discussed further below. The application server may also be configured to provide a plurality of non-mandatory or optional mobile device applications for download by the mobile wireless communications device based upon user prompting and user acceptance, at Blocks **46'-47',** as will also be discussed further in the examples provided below.

A related computer-readable medium is also provided which may have computer-executable instructions for causing the mobile device **33** to perform a step including initiating a registration request to register with the wireless communications network **32.** A further step may include downloading and installing one or more mandatory mobile device applications from the application server **31** via the wireless communications network **32** upon registration and without user prompting or user acceptance.

An exemplary mandatory application auto-load embodiment will now be described using the BlackBerry^{®} mobile wireless communications infrastructure in which a given BlackBerry^{®} device comprises Application Center software (i.e., computer-executable instructions or modules) for managing mandatory and non-mandatory applications. However, it should be noted that the techniques described in the context of the BlackBerry^{®} infrastructure may be used with other systems and devices as well, as will be appreciated by those skilled in the art. The auto-load functionality may advantageously be triggered when a mobile device registers with a particular cellular carrier network and the BlackBerry^{®} infrastructure, at which point the BlackBerry^{®} device receives transport and Application Center service books. The service books are used to determine the transport and carrier directory to load for the particular carrier network upon which the given BlackBerry^{®} device is to be used.

More particularly, the Application Center setup and configuration may be triggered by arrival of the service book(s) at the device. For corporate or enterprise applications, the Application Center may comply with IT policy allow/disallow settings, as will be appreciated by those skilled in the art. In such case, the Application Center may register a user for an IT Policy change and react accordingly upon changes of policy. The Application Center may then validate the URL of the Application Directory server delivered through the Service Book by validating the server certificate. The Application Center is also able to determine and set an available communication channel, e.g., a BlackBerry^{®} Enterprise Server (BES) or the BlackBerry^{®} Internet Service (BIS).

Once loaded, the directory contains a list of applications, some of which may be marked as auto-load mandatory, required, etc. applications. When the Application Center determines that an application from the list is marked as an auto-load application, it will download the application and install it on the device memory, "silently," in the background, and without requiring any user interaction (i.e., without user prompting or user acceptance). Using the selected communication channel, the Application Center performs initial download and caches available applications from an Application Directory server (e.g., the application server **31**). Using the downloaded application list, the Application Center downloads application images and icons and caches them as well. Initial download of the application list initiates the silent install of the mandatory applications. In the event that device reset is required for installation, the user may be prompted accordingly in some embodiments. Remaining mandatory applications after reset will resume their installations.

A flag in the permanent memory of the device may be marked to indicate that the initial boot auto load of applications has been completed, and in some embodiments it is not triggered again for this device, even if device data is wiped, as briefly discussed above. The mandatory applications will be available on the device, and the carrier will advantageously achieve its goal of making certain applications available on the device past the date of factory load of the device, but still being available at initial boot of the device.

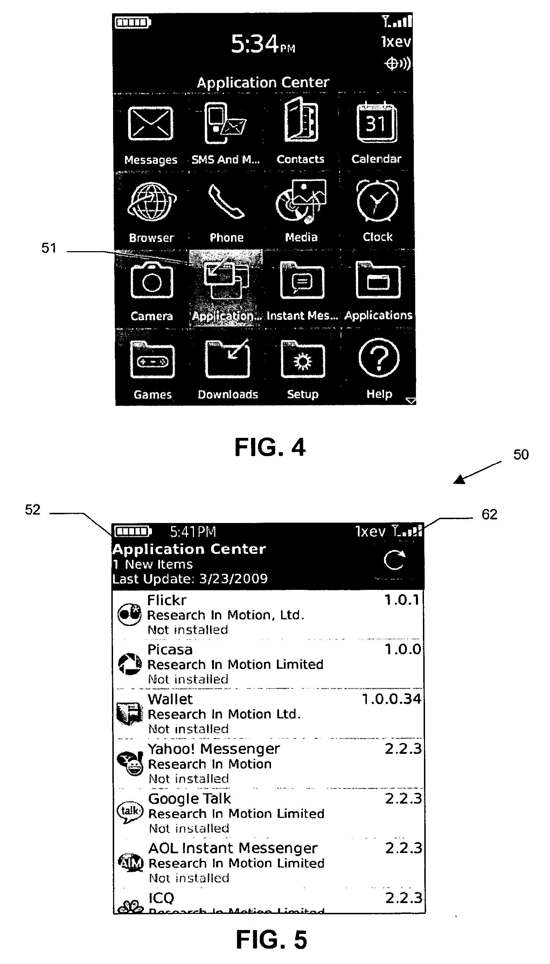

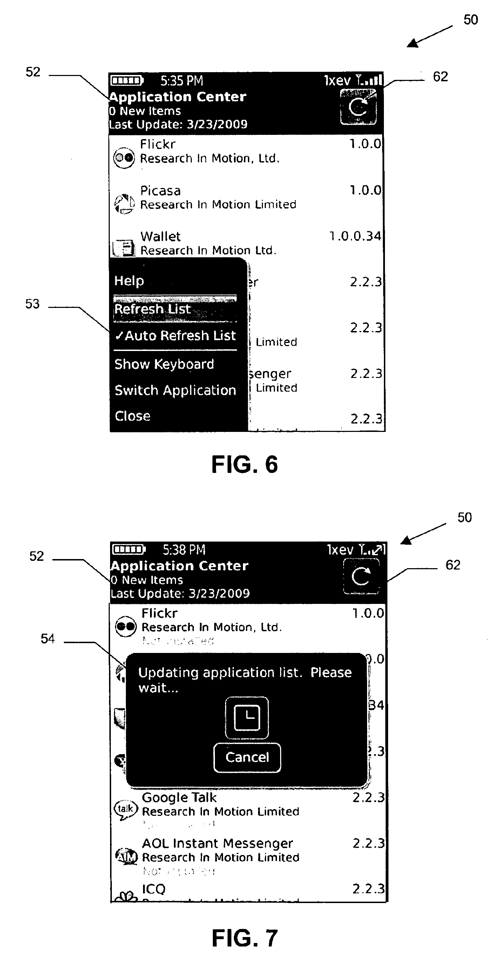

Turning now additionally to FIGS. 4-12, various screen shots of a mobile device screen or display 50 are provided to illustrate Application Center operation. Upon completion of the initial setup and configuration, an Application Center ribbon icon **51** appears on the screen. A "new" applications indicator may also be provided, which in the example illustrated in FIG. 4 is an asterisk ("*") on the icon **51,** but in other embodiments different indicators (or none at all) may be used. Once the user opens the Application Center, it will display optionally available or non-mandatory applications in the Application Directory server that are compatible with the particular device type, as shown in FIG. 5. In the illustrated example, these applications include "Facebook," "Flickr," "Picasa," "Wallet," "Yahoo! Messenger," and "Google Talk," although others may also be used. An indicator or information bar **52** on the main application screen advantageously notifies the user whether the list of applications is up to date or not, and provides a timestamp of the last update performed, if desired. As seen in FIGS. 6 and 7, a menu **53** may be provided with an option to refresh the application list, and an update indicator **54** may be provided to indicate that the update is in process. A refresh button **62** may also be provided.

When a Subscriber Identity Module (SIM) card from a different carrier is inserted into the device, for example, or the device is otherwise registered with a different carrier network, the service books from the new carrier are then pushed to the device and replace the old ones. The Application Center detects the new service book arrival and updates a Uniform Resource Locator (URL) associated with the new Application Directory server. Upon next update the Application Center will then use the new URL to download the list of available applications, as will be appreciated by those skilled in the art.

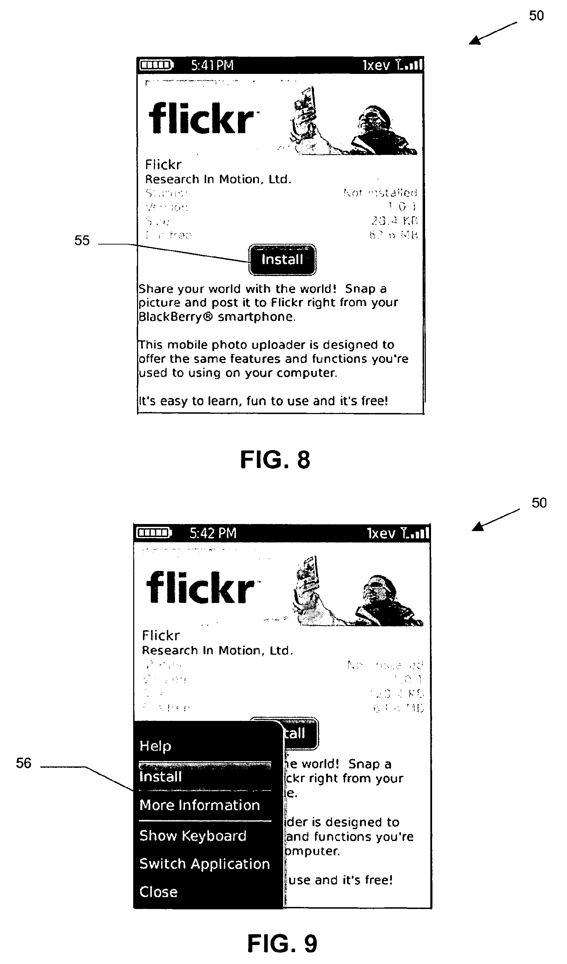

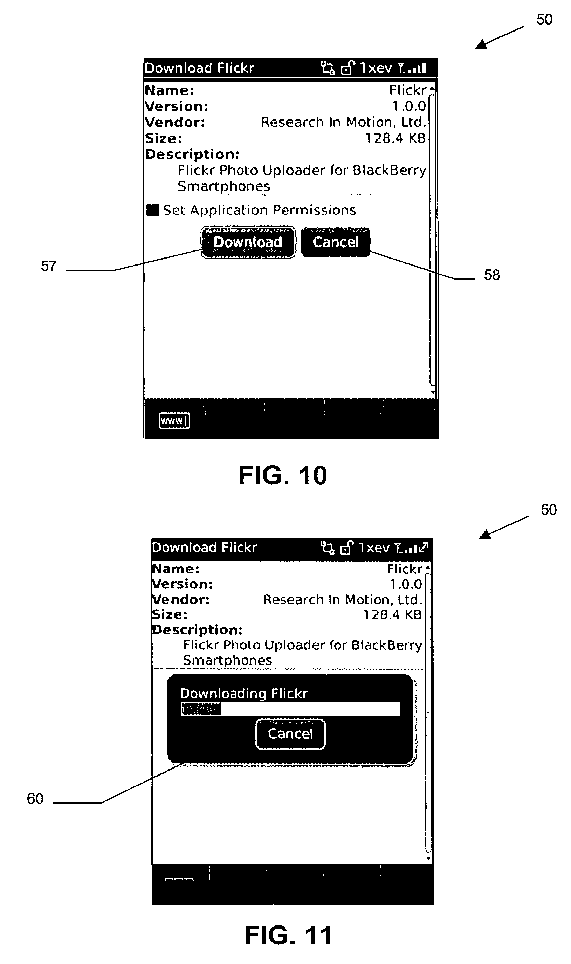

An exemplary non-mandatory application (i.e., "flickr") installation screen is shown in FIGS. 8 and 9. A button **55** is provided to initiate installation of the application. Also, a pop-up menu **56** is provided with an option for initiating the installation, although both the button **55** and menu options need not both be provided in all embodiments. Once the installation option is selected, a summary of the application selected for download and installation is provided, along with download and cancel buttons **57, 58** to respectively initiate or cancel the download process, as seen in FIG. 10. Once the download is initiated, a download status indicator **60** may optionally be provided (FIG. 11), along with an installation complete indicator **61** once the application is successfully downloaded or installed, as seen in FIG. 12.

By way of contract, prior automatic application installers, such as the Windows^{®} autoloader, are different in that upon initial boot up, such installers install applications that are previously loaded on a personal computer at manufacturing time (i.e., at the factory). Such autoloaders do not address the problem experienced by carriers, for example, of loading applications, and particularly mandatory applications, not available at device manufacture time. In accordance with the embodiments set forth herein, the applications may advantageously be auto-loaded at initial device boot, by downloading the applications over the air and installing them on the device on top of the factory loaded software.

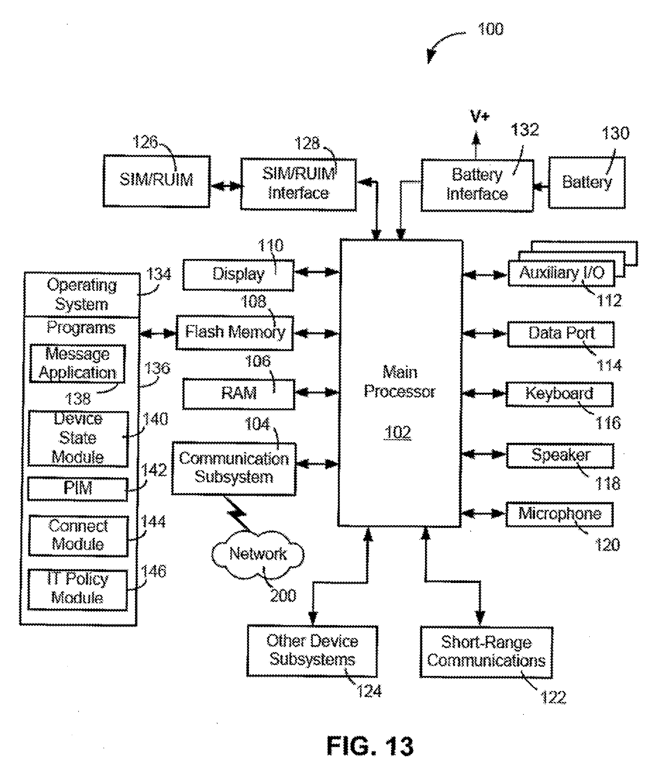

Further details of components that may be used in the system **30** are now provided with reference to FIGS. 13-16. The exemplary embodiments described herein may be used with mobile devices, which may be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further bellow. Examples of applicable communication devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

To aid the reader in understanding the structure of the mobile device and how it communicates with other devices and host systems, reference will now be made to FIGS. 13 through 16.
Referring first to FIG. 13, shown therein is a block diagram of an example embodiment of a mobile device **100.** The mobile device **100** includes a number of components such as a main processor **102** that controls the overall operation of the mobile device **100.** Communication functions, including data and voice communications, are performed through a communication subsystem **104.** The communication subsystem **104** receives messages from and sends messages to a wireless network **200.** In this example embodiment of the mobile device **100,** the communication subsystem **104** is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the example embodiments described herein are intended to use any other suitable standards that are developed in the future. The wireless link connecting the communication subsystem **104** with the wireless network **200** represents one or more different Radio Frequency (RF) channels, operating according to defined protocols specified for GSM/GPRS communications. With newer network protocols, these channels are capable of supporting both circuit switched voice communications and pocket switched data communications.

Although the wireless network **200** associated with mobile device **100** is a GSM/GPRS wireless network in one example implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11. Mobitex™ and DataTAC™ network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106,** a flash memory **108,** a display **110,** an auxiliary input/output (I/O) subsystem **112,** a data port **114,** a keyboard **116,** a speaker **118,** a microphone **120,** short-range communications **122** and other device subsystems **124.**

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **200,** and device-resident functions such as a calculator or task list.

The mobile device **100** can send and receive communication signals over the wireless network **200** after required network registration or activation procedures have been completed. Network access is associated with a subscriber or user of the mobile device **100.** To identify a subscriber, the mobile device **100** requires a SIM/RUIM card **126** (i.e. Subscriber Identity Module or a Removable User Identity Module) to be inserted into a SIM/RUIM interface **128** in order to communicate with a network. The SIM card or RUIN **126** is one type of a conventional "smart card" that can be used to identify a subscriber of the mobile device **100** and to personalize the mobile device **100,** among other things. Without the SIM card **126,** the mobile device **100** is not fully operational for communication with the wireless network **200.** By inserting the SIM card/RUIM **126** into the SIM/RUIM interface **128,** a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128,** it is coupled to the main processor **102.** In order to identify the subscriber, the SIM card/RUIM **126** can include some user parameters such as an International Mobile Subscriber Identity (IMSI). An advantage of using the SIM card/RUIM **126** is that a subscriber is not necessarily bound by any single physical mobile device. The SIM card/RUIM **126** may store additional subscriber information for a mobile device as well, including datebook (or calendar) information and recent call information. Alternatively, user identification information can also be programmed into the flash memory **108.**

The mobile device **100** is a battery-powered device and includes a battery interface **132** for receiving one or more rechargeable batteries **130.** In at least some example embodiments, the battery **130** can be a smart battery with an embedded microprocessor. The battery interface **132** is coupled to a regulator (not shown), which assists the battery **130** in providing power V+ to the mobile device **100.** Although current technology makes use of a battery, future technologies such as micro fuel cells may provide the power to the mobile device **100,**

The mobile device **100** also includes an operating system **134** and software components **136** to **146** which are described in more detail below. The operating system **134** and the software components **136** to **146** that are executed by the main processor **102** are typically stored in a persistent store such as the flash memory **108,** which may alternatively be a read-only memory (ROM) or similar storage element (not shown). Those skilled in the art will appreciate that portions of the operating system **134** and the software components **136** to **146,** such as specific device applications, or parts thereof, may be temporarily loaded into a volatile store such as the RAM **106.** Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory **108** of the mobile device **100** or some other suitable storage element in the mobile device **100.** In at least some example embodiments, some of the sent and received messages may be stored remotely from the device **100** such as in a data store of an associated host system that the mobile device **100** communicates with.

The software applications can further include a device state module **140**, a Personal Information Manager (PIM) **142,** and other suitable modules (not shown). The device state module **140** provides persistence, i.e. the device state module **140** ensures that important device data is stored in persistent memory, such as the flash memory **108,** so that the data is not lost when the mobile device **100** is turned off or loses power.

The PIM **142** includes functionality for organizing and managing data items of interest to the user, such as, but not limited to, e-mail, contacts, calendar events, voice mails, appointments, and task items. A PIM application has the ability to send and receive data items via the wireless network **200.** PIM data items may be seamlessly integrated, synchronized, and updated via the wireless network **200** with the mobile device subscriber's corresponding data items stored and/or associated with a host computer system. This functionality creates a mirrored host computer on the mobile device **100** with respect to such items. This can be particularly advantageous when the host computer system is the mobile device subscriber's office computer system.

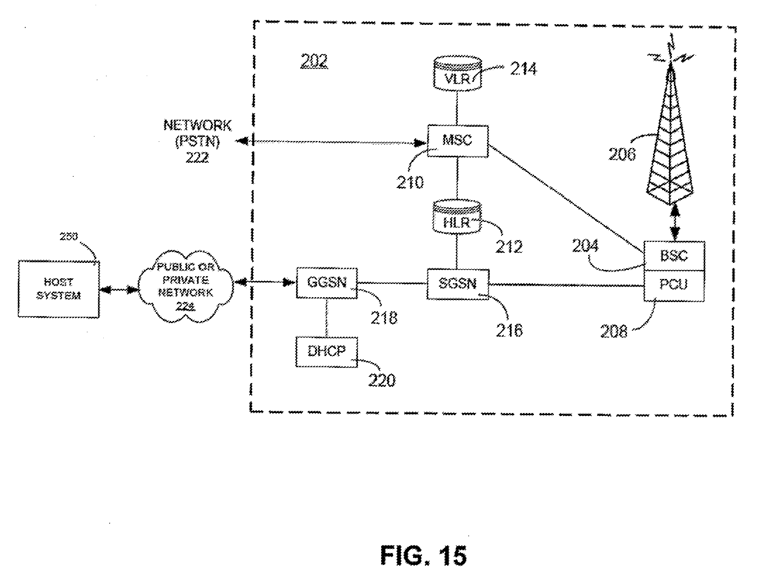

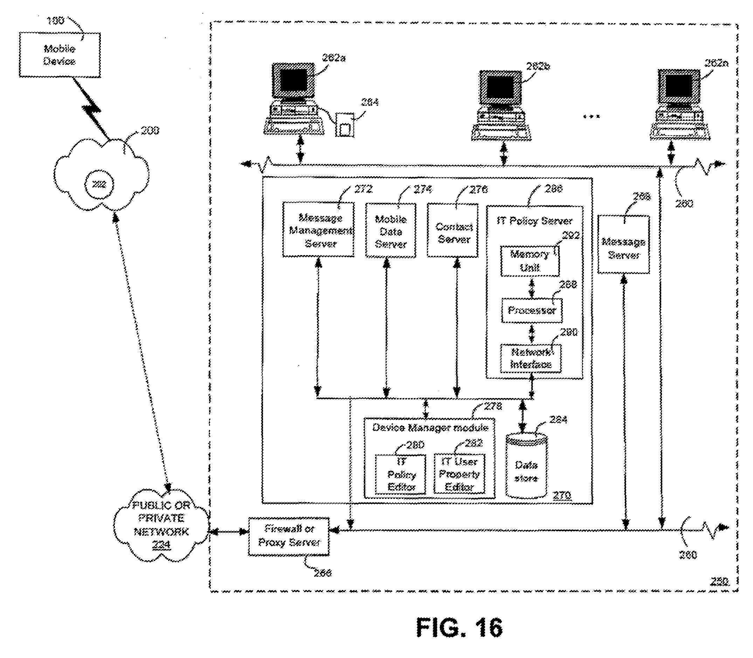

The mobile device **100** also includes a connect module **144,** and an IT policy module **146.** The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 15 and 16, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system. A subset of applications for which access is provided by the connect module **144** can be used to pass IT policy commands from the host system to the mobile device **100.** This can be done in a wireless or wired manner. These instructions can then be passed to the IT policy module **146** to modify the configuration of the device **100.** Alternatively, in some cases, the IT policy update can also be done over a wired connection.

The IT policy module **146** receives IT policy data that encodes the IT policy. The IT policy module **146** then ensures that the IT policy data is authenticated by the mobile device **100.** The IT policy data can then be stored in the flash memory **106** in its native form. After the IT policy data is stored, a global notification can be sent by the IT policy module **146** to all of the applications residing on the mobile device **100.** Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some example embodiments, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100.** These software applications can be third party applications, which are added after the manufacture of the mobile device **100.** Examples of third party applications include games, calculators, utilities, etc.

The additional applications can be loaded onto the mobile device **100** through at least one of the wireless network **200,** the auxiliary I/O subsystem **112,** the data port **114,** the short-range communications subsystem **122,** or any other suitable device subsystem **124.** This flexibility in application installation increases the functionality of the mobile device **100** and may provide enhanced on-device functions, communication-related functions, or both. For example, secure communication applications may enable electronic commerce functions and other such financial transactions to be performed using the mobile device **100.**

The data port **114** enables a subscriber to set preferences through an external device or software application and extends the capabilities of the mobile device **100** by providing for information or software downloads to the mobile device **100** other than through a wireless communication network. The alternate download patch may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100.**

The short-range communications subsystem **122** provides for communication between the mobile device **100** and different systems or devices, without the use of the wireless network **200.** For example, the subsystem **122** may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem **104** and input to the main processor **102.** The main processor **102** will then process the received signal for output to the display **110** or alternatively to the auxiliary I/O subsystem **112.** A subscriber may also compose data items, such as e-mail messages, for example, using the keyboard **116** in conjunction with the display **110** and possibly the auxiliary I/O subsystem **112.** The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **200** through the communication subsystem **104.**

For voice communications, the overall operation of the mobile device **100** is substantially similar, except that the received signals are output to the speaker **118,** and signals for transmission are generated by the microphone **120.** Alternative voice or audio I/O subsystems, such as a voice message recording subsystem, can also be implemented on the mobile device **100.** Although voice or audio signal output is accomplished primarily through the speaker **118,** the display **110** can also be used to provide additional information such as the identity of a calling party, duration of a voice call, or other voice call related information.

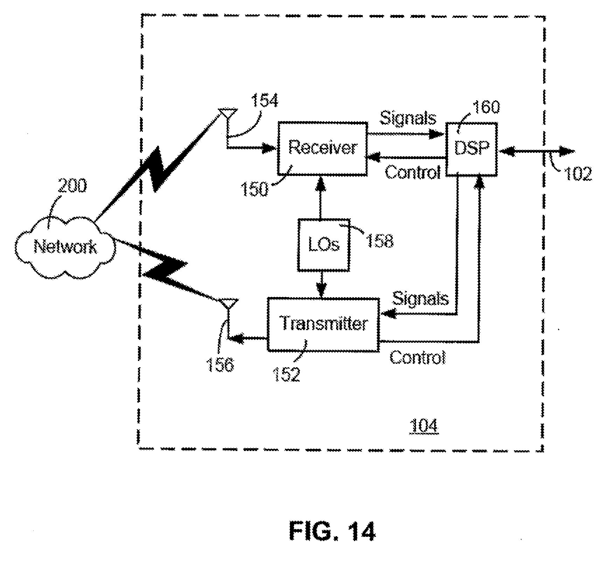

Referring now to FIG. 14, an example block diagram of the communication subsystem component **104** is shown. The communication subsystem **104** includes a receiver **150,** a transmitter **152,** as well us associated components such as one or more embedded or internal antenna elements **154** and **156,** Local Oscillators (LOs) **158,** and a processing module such as a Digital Signal Processor (DSP) **160.** The particular design of the communication subsystem **104** is dependent upon the communication network **200** with which the mobile device **100** is intended to operate. Thus, it should be understood that the design illustrated in FIG. 14 serves only as one example.

Signals received by the antenna **154** through the wireless network **200** are input to the receiver **150,** which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP **160.** In a similar manner, signals to be transmitted are processed, including modulation and encoding, by the DSP **160.** These DSP-processed signals are input to the transmitter **152** for digital-to-analog (D/A) conversion, frequency up conversion, filtering, amplification and transmission over the wireless network **200** via the antenna **156.** The DSP **160** not only processes communication signals, but also provides for receiver and transmitter control. For example, the gains applied to communication signals in the receiver **150** and the transmitted **152** may be adaptively controlled through automatic gain control algorithms implemented in the DSP **160.**

The wireless link between the mobile device **100** and the wireless network **200** can contain one or more different channels, typically different RF channels, and associated protocols used between the mobile device **100** and the wireless network **200.** An RF channel is a limited resource that must be conserved, typically due to limits in overall bandwidth and limited battery power of the mobile device **100.**

When the mobile device **100** is fully operational, the transmitter **152** is typically keyed or turned on only when it is transmitting to the wireless network **200** and is otherwise turned off to conserve resources. Similarly, the receiver **150** is periodically turned off to conserve power until it is needed to receive signals or information (if at all) during designated time periods.

Referring now to FIG. 15, a block diagram of an example implementation of a node 202 of the wireless network 200 is shown. In practice, the wireless network 200 comprises one or more nodes 202. In conjunction with the connect module 144, the mobile device 100 can communicate with the node 202 within the wireless network 200. In the example implementation of FIG. 15, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC **204** also contains the Packet Control Unit (PCU) **208** that connects to the SGSN **216** to control segmentation, radio channel allocation and to satisfy packet switched requirements. To track the location of the mobile device **100** and availability for both circuit switched and packet switched management, the HLR **212** is shared between the **MSC 210** and the SGSN **216.** Access to the VLR **214** is controlled by the MSC **210.**

The station **206** is a fixed transceiver station and together with the BSC **204** form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station **206.** The fixed transceiver equipment normally performs such functions as modulation and possibly encoding and/or encryption of signals to be transmitter to the mobile device **100** in accordance with particular, usually predetermined, communication protocols and parameters, under control of its controller. The fixed transceiver equipment similarly demodulates and possibly decodes and decrypts, if necessary, any communication signals received from the mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile is stored in the HLR **212.** The HLR **212** also contains location information for each registered mobile device and can be queried to determine the current location of a mobile device. The MSC **210** is responsible for a group of location areas and stores the data of the mobile devices currently in its area of responsibility in the VLR **214.** Further, the VLR **214** also contains information on mobile devices that are visiting other networks. The information in the VLR **214** includes part of the permanent mobile device data transmitted from the HLR **212** to the VLR **214** for faster access. By moving additional information from a remote HLR **212** node to the VLR **214,** the amount of traffic between these nodes can be reduced so that voice and data services can be provided with faster response times and at the same time requiring less use of computing resources.

The SGSN **216** and the GGSN **218** are elements added for GPRS support; namely packet switched data support, within GSM. The SGSN **216** and the MSC **210** have similar responsibilities within the wireless network **200** by keeping track of the location of each mobile device **100.** The SGSN **216** also performs security functions and access control for data traffic on the wireless network **200.** The GGSN **218** provides internetworking connections with external packet switched networks and connects to one or more SGSN's **216** via an Internet Protocol (IP) backbone network operated within the network **200.** During normal operations, a given mobile device **100** must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server **220** connected to the GGSN **218.** There are many mechanisms for dynamic IP assignment, including using a combination of a Remote Authentication Dial-In User Service (RADIUS) server and a DHCP server. Once the GPRS Attach is complete, a logical connection is established from a mobile device **100,** through the PCU **208,** and the SGSN **216** to an Access Point Node (APN) within the GGSN **218.** The APN represents a logical end of an IP tunnel that can either access direct Internet compatible services or private network connections. The APN also represents a security mechanism for the network **200,** insofar as each mobile device **100** must be assigned to one or more APNs and mobile devices **100** cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some Insecurity (IPsec) connections used with Virtual Private Networks (VPN). These tunnels are also referred to as Packet Data Protocol (PDP) Contexts and there are a limited number of these available in the network **200.** To maximize use of the PDP Contexts, the network **200** will run an idle timer for each PDP Context to determine if there is a lack of activity. When a mobile device **100** is not using its PDP Context, the PDP Context can be de-allocated and the IP address returned to the IP address pool managed by the DHCP server **220.**

Referring now to FIG. 16, shown therein is a block diagram illustrating components of an example configuration of a host system **250** that the mobile device 100 can communicate with in conjunction with the connect module **144,** The host system **250** will typically be a corporate enterprise or other local area network (LAN), but may also be a home office computer or some other private system, for example, in variant implementations. In this example shown in FIG. 16, the host system **250** is depicted as a LAN of an organization to which a user of the mobile device **100** belongs. Typically, a plurality of mobile devices can communicate wirelessly with the host system **250** through one or more nodes **202** of the wireless network **200.**

The host system **250** comprises a number of network components connected to each other by a network **260.** For instance, a user's desktop computer **262a** with an accompanying cradle **264** for the user's mobile device **100** is situated on a LAN connection. The cradle **264** for the mobile device **100** can be coupled to the computer **262a** by a serial or a Universal Serial Bus (USB) connection, for example. Other user computers **262b-262n** are also situated on the network **260,** and each may or may not be equipped with an accompanying cradle **264.** The cradle **264** facilitates the loading of information (e.g. PIM data, private symmetric encryption keys to facilitate secure communications) from the user computer **262a** to the mobile device **100,** and may be particularly useful for bulk information updates often performed in initializing the mobile device **100** for use. The information downloaded to the mobile device **100** may include certificates used in the exchange of messages.

It will be understood by persons skilled in the art that the user computers **262a-262n** will typically also be connected to other peripheral devices, such as printers, etc. which are not explicitly shown in FIG. 16. Furthermore, only a subset of network components of the host system **250** are shown in FIG. 16 for ease of exposition, and it will be understood by persons skilled in the art that the host system **250** will comprise additional components that are not explicitly shown in FIG. 16 for this example configuration. More generally, the host system **250** may represent a smaller part of a larger network (not shown) of the organization, and may comprise different components and/or be arranged in different topologies than that shown in the example embodiment of FIG. 16.

To facilitate the operation of the mobile device **100** and the wireless communication of messages and message-related data between the mobile device **100** and components of the host system **250,** a number of wireless communication support components **270** can be provided. In some implementations, the wireless communication support components **270** can include a message management server **272,** a mobile data server **274,** a contact server **276,** and a device manager module **278.** The device manager module **278** includes an IT Policy editor **280** and an IT user property editor **282,** as well as other software components for allowing an IT administrator to configure the mobile devices **100,** In an alternative example embodiment, there may be one editor that provides the functionality of both the IT policy editor **280** and the IT user property editor **282.** The support components **270** also include a data store **284,** and an IT policy server **286.** The IT policy server **286** includes a processor **288,** a network interface **290** and a memory unit **292.** The processor **288** controls the operation of the IT policy server **286** and executes functions related to the standardized IT policy as described below. The network interface **290** allows the IT policy server **286** to communicate with the various components of the host system **250** and the mobile devices **100.** The memory unit **292** can store functions used in implementing the IT policy as well as related data. Those skilled in the art know how to implement these various components. Other components may also be included as is well known to those skilled in the art. Further, in some implementations, the data store **284** can be part of any one of the servers.

In this example embodiment, the mobile device **100** communicates with the host system **250** through node **202** of the wireless network **200** and a shared network infrastructure **224** such as a service provider network or the public Internet. Access to the host system **250** may be provided through one or more routers (not shown), and computing devices of the host system **250** may operate from behind a firewall or proxy server **266.** The proxy server **266** provides a secure node and a wireless Internet gateway for the host system **250.** The proxy server **266** intelligently routes data to the correct destination server within the host system **250.**

In some implementations, the host system **250** can include a wireless VPN router (not shown) to facilitate data exchange between the host system **250** and the mobile device **100.** The wireless VPN router allows a VPN connection to be established directly through a specific wireless network to the mobile device **100.** The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off the shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device **100** in this alternative implementation.

Messages intended for a user of the mobile device **100** are initially received by a message server **268** of the host system **250.** Such messages may originate from any number of sources. For instance, a message may have been sent by a sender from the computer **262b** within the host system **250,** from a different mobile device (not shown) connected to the wireless network **200** or a different wireless network, or from a different computing device, or other device capable of sending messages, via the shared network infrastructure **224,** possibly through an application service provider (ASP) or Internet service provider (ISP), for example.

The message server **268** typically acts as the primary interface for the exchange of messages, particularly e-mail messages, within the organization and over the shared network infrastructure **224.** Each user in the organization that has been set up to send and receive messages is typically associated with a user account managed by message server **268.** Some example implementations of the message server **268** include a Microsoft Exchange™ server, a Lotus Domino™ server, a Novell Groupwise™ server, or another suitable mail server installed in a corporate environment. In some implementations, the host system **250** may comprise multiple message servers **268.** The message server **268** may also be adapted to provide additional functions beyond message management, including the management of data associated with calendars and task lists, for example.

when messages are received by the message server **268,** they are typically stored in a data store associated with the message server **268.** In at least some example embodiments, the data store may be a separate hardware unit, such as data store **284,** that the message server **268** communicates with. Messages can be subsequently retrieved and delivered to users by accessing the message server **268.** For instance, an e-mail client application operating on a user's computer **262a** may request the e-mail messages associated with that user's account stored on the data store associated with the message server **268.** These messages are then retrieved from the data store and stored locally on the computer **262a.** The data store associated with the message server **268** can store copies of each message that is locally stored on the mobile device **100.** Alternatively, the data store associated with the message server **268** can store all of the messages for the user of the mobile device **100** and only a smaller number of messages can be stored on the mobile device **100** to conserve memory. For instance, the most recent messages (i.e. those received in the past two to three months for example) can be stored on the mobile device **100.**

When operating the mobile device **100,** the user may wish to have e-mail messages retrieved for delivery to the mobile device **100.** The message application **138** operating on the mobile device **100** may also request messages associated with the user's account from the message server **268.** The message application **138** may be configured (either by the user or by an administrator, possibly in accordance with an organisation's information technology (IT) Policy) to make this request at the direction of the user, at some pre-defined time interval, or upon the occurrence of some pre-defined event. In some implementations, the mobile device **100** is assigned its own e-mail address, and messages addressed specifically to the mobile device **100** are automatically redirected to the mobile device **100** as they are received by the message server **268.**

The message management server **272** can be used to specifically provide support for the management of messages, such as e-mail messages, that are to be handled by mobile devices. Generally, while messages are still stored on the message server **268,** the message management server **272** can be used to control when, if, and how messages are sent to the mobile device **100.** The message management server **272** also facilitates the handling of messages composed on the mobile device **100,** which are sent to the message server **268 for** subsequent delivery.

For example, the message management server **272** may monitor the user's "mailbox" (e.g. the message store associated with the user's account on the message server **268**) for new e-mail messages, and apply users-definable filters to new messages to determine if and how the messages are relayed to the user's mobile device **100.** The message management server **272** may also compress and encrypt new messages (e.g. using an encryption technique such as Data Encryption Standard (DES), Triple DES, or Advanced Encryption Standard (AES)) and push them to the mobile device **100** via the shared network infrastructure **224** and the wireless network **200.** The message management server **272** may also receive messages composed on the mobile device **100** (e.g. encrypted using Triple DES), decrypt and decompress the composed messages, re-format the composed messages if desired so that they will appear to have originated from the user's computer **262a,** and re-route the composed messages to the message server **268** for delivery.

Certain properties or restrictions associated with messages that are to be sent from and/or received by the mobile device **100** can be defined (e.g. by an administrator in accordance with IT policy) and enforced by the message management server **272.** These may include whether the mobile device **100** may receive encrypted and/or signed messages, minimum encryption key sizes, whether outgoing messages must be encrypted and/or signed, and whether copies of all secure messages sent from the mobile device **100** are to be sent to a pre-defined copy address, for example.

The message management server **272** may also be adapted to provide other control functions, such as only pushing certain message information or pre-defined portions (e.g. "blocks") of a message stored on the message server **268** to the mobile device **100.** For example, in some cases, when a message is initially retrieved by the mobile device **100** from the message server **268,** the message management server **272** may push only the first part of a message to the mobile device **100,** with the part being of a pre-defined size (e.g. 2 KB). The user can then request that more of the message be delivered in similar-sized blocks by the message management server **272** to the mobile device **100,** possibly up to a maximum pre-defined message size. Accordingly, the message management server **272** facilitates better control over the type of data and the amount of data that is communicated to the mobile device **100,** and can help to minimize potential waste of bandwidth or other resources.

The mobile data server **274** encompasses any other server that stores information that is relevant to the corporation. The mobile data server **274** may include, but is not limited to, databases, online data document repositories, customer relationship management (CRM) systems, or enterprise resource planning (ERP) applications.

The contact server **276** can provide information for a list of contacts for the user in a similar fashion as the address book on the mobile device **100.** Accordingly, for a given contact, the contact server **276** can include the name, phone number, work address, and e-mail address of the contact, among other information. The contact server **276** can also provide a global address list that contains the contact information for all of the contacts associated with the host system **250.**

It will be understood by persons skilled in the art that the message management server **272,** the mobile data server **274,** the contact server **276,** the device manager module **278,** the data store **284** and the IT policy server **286** do not need to be implemented on separate physical servers within the host system **250.** For example, some or all of the functions associated with the message management server **272** may be integrated with the message server **268,** or some other server in the host system **250.** Alternatively, the host system **250** may comprise multiple message management servers **272,** particularly in variant implementation where a large number of mobile devices need to be supported.

Alternatively, in some example embodiments, the IT policy server **286** can provide the IT policy editor **280,** the IT user property editor **282** and the data store **284.** In some cases, the IT policy server **286** can also provide the device manager module **278.** The processor **288** of the IT policy server **286** can be used to perform the various steps of a method for providing IT policy data that is customizable on a per-user basis as explained further below and in conjunction with FIGS. 5 to 8. The processor **288** can execute the editors **280** and **282.** In some cases, the functionality of the editors **280** and **282** can be provided by a single editor. In some cases, the memory unit **292** can provide the data store **284.**

The device manager module **278** provides an IT administrator with a graphical user interface with which the IT administrator interacts to configure various settings for the mobile devices **100.** As mentioned, the IT administrator can use IT policy rules to define behaviors of certain applications on the mobile device **100** that are permitted such as phone, web browser or Instant Messenger use. The IT policy rules can also be used to set specific values for configuration settings that an organisation requires on the mobile **devices 100** such as auto signature text, WLAN/VoIP/VPN configuration, security requirements (e.g. encryption algorithms, password rules, etc.), specifying themes or applications that are allowed to run on the mobile device **100,** and the like.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications system (30) comprising:
an application server (31) configured to provide a plurality of mobile device applications, at least one of the mobile device applications being marked as mandatory; and
a mobile wireless communications device (33) configured to
initiate a registration request to register with a particular wireless communications network (32) from among a plurality of different wireless communications networks and receive at least one service book,
determine a carrier directory on the application server for the particular wireless communications network based upon the at least one service book, and determine the at least one mobile device application marked as mandatory based thereon, and
download and install the at least one mandatory mobile device application from the carrier directory on said application server via the wireless communications network upon registration during background operation and without user prompting or user acceptance.

2. The mobile wireless communications system (30) of Claim 1 wherein said mobile wireless communications device (33) is further configured to store an initial installation indicator for the at least one mandatory mobile device application.

3. The mobile wireless communications system (30) of Claim 2 wherein said mobile wireless communications device (33) is further configured to determine if the initial installation indicator is stored prior to downloading and installing the at least one mandatory mobile device application.

4. The mobile wireless communications system (30) of Claim 2 wherein said mobile wireless communications device (33) comprises a non-volatile memory for storing the initial installation indicator.

5. The mobile wireless communications system (30) of Claim 1 wherein at least one of the plurality of mobile device applications is not marked as mandatory and is for download by said mobile wireless communications device (33) during foreground operation based upon user prompting and user acceptance.

6. The mobile wireless communications system (30) of Claim 1 wherein the particular wireless communications network (32) comprises a cellular network.

7. A mobile wireless communications device (33) comprising:
a memory; and
a processor (102) cooperating with said memory and configured to
initiate a registration request to register with a wireless communications network (32) and receive at least one service book,
determine, based upon the at least one service book, at least one mobile device application marked as mandatory from a plurality of mobile device applications stored on an application server (31) and
download and install the at least one mandatory mobile device application from the application server via the wireless communications network to said memory upon registration during background operation and without user prompting or user acceptance.

8. The mobile wireless communications device (33) of Claim 7 wherein said processor (102) is further configured to store an initial installation indicator for the at least one mandatory mobile device application in said memory.

9. The mobile wireless communications device (33) of Claim 8 wherein said processor (102) is further configured to determine if the initial installation indicator is stored prior to downloading and installing of the at least one mandatory mobile device application.

10. The mobile wireless communications device of Claim 7 wherein at least one of the plurality of mobile device applications is not marked as mandatory; and wherein said processor (102) is further configured to selectively download and install the at least one non-mandatory mobile device application from the carrier directory on the application server (31) to said memory during foreground operation based upon user prompting and user acceptance.

11. The mobile wireless communications device of Claim 7 wherein the wireless communications network (32) comprises a cellular network; and further comprising a cellular transceiver for communicating with the cellular network.

12. A mobile wireless communications method comprising:
initiating a registration request to register a mobile wireless communications device (33) with a particular wireless communications network (32) from among a plurality of different wireless communications networks and receive at least one service book;
determining a carrier directory on an application server for the particular wireless communications network based upon the at least one service book, the application server configured to provide a plurality of mobile device applications;
determining from the carrier directory at least one mobile device application marked as mandatory, and
downloading the at least one mandatory mobile device application from the carrier directory on the application server to the mobile wireless communications device via the wireless communications network, and installing the at least one mandatory mobile device application on the mobile wireless communications device, upon registration during background operation and without user prompting or user acceptance.

13. The method of Claim 12 further comprising storing an initial installation indicator on the mobile wireless communications device (33) for the at least one mandatory mobile device application.

14. The method of Claim 13 further comprising determining determine if the initial installation indicator is stored prior to downloading and installing the at least one mandatory mobile device application.

15. The method of Claim 13 wherein at least one of the plurality of mobile device applications is not marked as mandatory; and further comprising selectively downloading and installing the at least one non-mandatory mobile device application from the carrier directory on the application server (31) to the mobile wireless communications device (33) during foreground operation based upon user prompting and user acceptance.

## Patentansprüche

1. Ein mobiles drahtloses Kommunikationssystem (30), das aufweist:
einen Anwendungsserver (31), der konfiguriert ist zum Vorsehen einer Vielzahl von Mobilvorrichtungsanwendungen, wobei zumindest eine der Mobilvorrichtungsanwendungen als obligatorisch gekennzeichnet ist; und
eine mobile drahtlose Kommunikationsvorrichtung (33), die konfiguriert ist zum
Initiieren einer Registrierungsanforderung zum Registrieren mit einem bestimmten drahtlosen Kommunikationsnetzwerk (32) aus einer Vielzahl von verschiedenen drahtlosen Kommunikationsnetzwerken und Empfangen zumindest eines Dienstbuchs,
Bestimmen eines Carrier-Verzeichnisses auf dem Anwendungsserver für das bestimmte drahtlose Kommunikationsnetzwerk basierend auf dem zumindest einen Dienstbuch und, darauf basierend, Bestimmen der zumindest einen Mobilvorrichtungsanwendung, die als obligatorisch gekennzeichnet ist, und
Herunterladen und Installieren der zumindest einen obligatorischen Mobilvorrichtungsanwendung von dem Carrier-Verzeichnis auf dem Anwendungsserver über das drahtlose Kommunikationsnetzwerk bei einer Registrierung während eines Hintergrundbetriebs und ohne eine Benutzeraufforderung oder Benutzerannahme.

2. Das mobile drahtlose Kommunikationssystem (30) gemäß Anspruch 1, wobei die mobile drahtlose Kommunikationsvorrichtung (33) weiter konfiguriert ist zum Speichern eines Anfangsinstallationsindikators für die zumindest eine obligatorische Mobilvorrichtungsanwendung.

3. Das mobile drahtlose Kommunikationssystem (30) gemäß Anspruch 2, wobei die mobile drahtlose Kommunikationsvorrichtung (33) weiter konfiguriert ist zum Bestimmen, ob der Anfangsinstallationsindikator gespeichert ist, vor dem Herunterladen und Installieren der zumindest einen obligatorischen Mobilvorrichtungsanwendung.

4. Das mobile drahtlose Kommunikationssystem (30) gemäß Anspruch 2, wobei die mobile drahtlose Kommunikationsvorrichtung (33) einen nichtflüchtigen Speicher zum Speichern des Anfangsinstallationsindikators aufweist.

5. Das mobile drahtlose Kommunikationssystem (30) gemäß Anspruch 1, wobei zumindest eine der Vielzahl von Mobilvorrichtungsanwendungen nicht als obligatorisch gekennzeichnet ist und zum Herunterladen durch die mobile drahtlose Kommunikationsvorrichtung (33) während eines Vordergrundbetriebs basierend auf einer Benutzeraufforderung und Benutzerannahme ist.

6. Das mobile drahtlose Kommunikationssystem (30) gemäß Anspruch 1, wobei das bestimmte drahtlose Kommunikationsnetzwerk (32) ein zellulares Netzwerk aufweist.

7. Eine mobile drahtlose Kommunikationsvorrichtung (33), die aufweist:
einen Speicher; und
einen Prozessor (102), der mit dem Speicher zusammenarbeitet und konfiguriert ist zum
Initiieren einer Registrierungsanforderung zum Registrieren mit einem drahtlosen Kommunikationsnetzwerk (32) und Empfangen zumindest eines Dienstbuchs,
Bestimmen, basierend auf dem zumindest einen Dienstbuch, zumindest einer Mobilvorrichtungsanwendung, die als obligatorisch gekennzeichnet ist, aus einer Vielzahl von Mobilvorrichtungsanwendungen, die auf einem Anwendungsserver (31) gespeichert sind, und Herunterladen und Installieren der zumindest einen obligatorischen Mobilvorrichtungsanwendung von dem Anwendungsserver über das drahtlose Kommunikationsnetzwerk auf den Speicher bei einer Registrierung während eines Hintergrundbetriebs und ohne eine Benutzeraufforderung oder Benutzerannahme.

8. Die mobile drahtlose Kommunikationsvorrichtung (33) gemäß Anspruch 7, wobei der Prozessor (102) weiter konfiguriert ist zum Speichern eines Anfangsinstallationsindikators für die zumindest eine obligatorische Mobilvorrichtungsanwendung in dem Speicher.

9. Die mobile drahtlose Kommunikationsvorrichtung (33) gemäß Anspruch 8, wobei der Prozessor (102) weiter konfiguriert ist zum Bestimmen, ob der Anfangsinstallationsindikator gespeichert ist, vor dem Herunterladen und Installieren der zumindest einen obligatorischen Mobilvorrichtungsanwendung.

10. Die mobile drahtlose Kommunikationsvorrichtung (33) gemäß Anspruch 7, wobei zumindest eine der Vielzahl von Mobilvorrichtungsanwendungen nicht als obligatorisch gekennzeichnet ist; und wobei der Prozessor (102) weiter konfiguriert ist zum selektiven Herunterladen und Installieren der zumindest einen nicht-obligatorischen Mobilvorrichtungsanwendung von dem Carrier-Verzeichnis auf dem Anwendungsserver (31) in den Speicher während eines Vordergrundbetriebs basierend auf einer Benutzeraufforderung und Benutzerannahme.

11. Die mobile drahtlose Kommunikationsvorrichtung (33) gemäß Anspruch 7, wobei das drahtlose Kommunikationsnetzwerk (32) ein zellulares Netzwerk aufweist; und weiter einen zellularen Transceiver zum Kommunizieren mit dem zellularen Netzwerk aufweisend.

12. Ein mobiles drahtloses Kommunikationsverfahren, das aufweist:
Initiieren einer Registrierungsanforderung zum Registrieren einer mobilen drahtlosen Kommunikationsvorrichtung (33) mit einem bestimmten drahtlosen Kommunikationsnetzwerk (32) aus einer Vielzahl von verschiedenen drahtlosen Kommunikationsnetzwerken und Empfangen zumindest eines Dienstbuchs;
Bestimmen eines Carrier-Verzeichnisses auf einem Anwendungsserver für das bestimmte drahtlose Kommunikationsnetzwerk basierend auf dem zumindest einen Dienstbuch, wobei der Anwendungsserver konfiguriert ist zum Vorsehen einer Vielzahl von Mobilvorrichtungsanwendungen;
Bestimmen, aus dem Carrier-Verzeichnis, zumindest einer Mobilvorrichtungsanwendung, die als obligatorisch gekennzeichnet ist, und
Herunterladen der zumindest einen obligatorischen Mobilvorrichtungsanwendung von dem Carrier-Verzeichnis auf dem Anwendungsserver auf die mobile drahtlose Kommunikationsvorrichtung über das drahtlose Kommunikationsnetzwerk und Installieren der zumindest einen obligatorischen Mobilvorrichtungsanwendung auf der mobilen drahtlosen Kommunikationsvorrichtung bei einer Registrierung während eines Hintergrundbetriebs und ohne eine Benutzeraufforderung oder Benutzerannahme.

13. Das Verfahren gemäß Anspruch 12, das weiter ein Speichern eines Anfangsinstallationsindikators auf der mobilen drahtlosen Kommunikationsvorrichtung (33) für die zumindest eine obligatorische Mobilvorrichtungsanwendung aufweist.

14. Das Verfahren gemäß Anspruch 13, das weiter ein Bestimmen aufweist, ob der Anfangsinstallationsindikator gespeichert ist vor dem Herunterladen und Installieren der zumindest einen obligatorischen Mobilvorrichtungsanwendung.

15. Das Verfahren gemäß Anspruch 13, wobei zumindest eine der Vielzahl von Mobilvorrichtungsanwendungen nicht als obligatorisch gekennzeichnet ist; und weiter aufweist ein selektives Herunterladen und Installieren der zumindest einen nicht-obligatorischen Mobilvorrichtungsanwendung von dem Carrier-Verzeichnis auf dem Anwendungsserver (31) auf die mobile drahtlose Kommunikationsvorrichtung (33) während eines Vordergrundbetriebs basierend auf einer Benutzeraufforderung und Benutzerannahme.

## Revendications

1. Système de communication mobile sans fil (30) comprenant :
un serveur d'applications (31) configuré pour fournir une pluralité d'applications pour dispositifs mobiles, au moins une des applications pour dispositifs mobiles étant marquée comme obligatoire ; et
un dispositif de communication mobile sans fil (33) configuré pour :
lancer une demande d'enregistrement afin de s'enregistrer auprès d'un réseau de communication sans fil particulier (32) parmi une pluralité de réseaux de communication sans fil différents et recevoir au moins un annuaire de services ;
déterminer un répertoire d'opérateur sur le serveur d'applications pour le réseau de communication sans fil particulier, en fonction dudit au moins un annuaire de services, et, en fonction de cela, déterminer ladite au moins une application pour dispositifs mobiles qui est marquée comme obligatoire ; et
télécharger et installer ladite au moins une application obligatoire pour dispositifs mobiles à partir du répertoire d'opérateur sur ledit serveur d'applications, via le réseau de communication sans fil, en tâche de fond après enregistrement et sans message d'invite à l'utilisateur ou acceptation par l'utilisateur.

2. Système de communication mobile sans fil (30) selon la revendication 1, dans lequel ledit dispositif de communication mobile sans fil (33) est en outre configuré pour enregistrer un indicateur d'installation initiale pour ladite au moins une application obligatoire pour dispositifs mobiles.

3. Système de communication mobile sans fil (30) selon la revendication 2, dans lequel ledit dispositif de communication mobile sans fil (33) est en outre configuré pour déterminer si l'indicateur d'installation initiale est enregistré avant de télécharger et d'installer ladite au moins une application obligatoire pour dispositifs mobiles.

4. Système de communication mobile sans fil (30) selon la revendication 2, dans lequel ledit dispositif de communication mobile sans fil (33) comprend une mémoire non volatile afin d'enregistrer l'indicateur d'installation initiale.

5. Système de communication mobile sans fil (30) selon la revendication 1, dans lequel au moins l'une des applications pour dispositifs mobiles n'est pas marquée comme obligatoire et est destinée à être téléchargée par ledit dispositif de communication mobile sans fil (33) en tâche de premier plan, en fonction d'un message d'invite adressé à l'utilisateur et d'une acceptation par l'utilisateur.

6. Système de communication mobile sans fil (30) selon la revendication 1, dans lequel le réseau de communication sans fil particulier (32) consiste en un réseau cellulaire.

7. Dispositif de communication mobile sans fil (33) comprenant :
une mémoire ; et
un processeur (102) coopérant avec ladite mémoire et configuré pour :
lancer une demande d'enregistrement afin de s'enregistrer auprès d'un réseau de communication sans fil (32) et de recevoir au moins un annuaire de services ;
déterminer, en fonction dudit au moins un annuaire de services, au moins une application pour dispositifs mobiles qui est marquée comme obligatoire parmi la pluralité d'applications pour dispositifs mobiles enregistrée sur un serveur d'applications (31) ; et
télécharger et installer dans la mémoire ladite au moins une application obligatoire pour dispositifs mobiles à partir du serveur d'applications, via le réseau de communication sans fil, en tâche de fond après enregistrement et sans message d'invite à l'utilisateur ou acceptation par l'utilisateur.

8. Dispositif de communication mobile sans fil (33) selon la revendication 7, dans lequel ledit processeur (102) est en outre configuré pour enregistrer un indicateur d'installation initiale dans ladite mémoire pour ladite au moins une application obligatoire pour dispositifs mobiles.

9. Dispositif de communication mobile sans fil (33) selon la revendication 8, dans lequel ledit processeur (102) est en outre configuré pour déterminer si l'indicateur d'installation initiale est enregistré avant de télécharger et d'installer ladite au moins une application obligatoire pour dispositifs mobiles.

10. Dispositif de communication mobile sans fil (33) selon la revendication 7, dans lequel au moins l'une des applications pour dispositifs mobiles n'est pas marquée comme obligatoire, et dans lequel ledit processeur (102) est en outre configuré pour télécharger et installer sélectivement dans la mémoire ladite au moins une application non obligatoire pour dispositifs mobiles à partir du répertoire d'opérateur sur le serveur d'applications (31) en tâche de premier plan, en fonction d'un message d'invite adressé à l'utilisateur et d'une acceptation par l'utilisateur.

11. Dispositif de communication mobile sans fil (33) selon la revendication 7, dans lequel le réseau de communication sans fil (32) consiste en un réseau cellulaire, et comprenant en outre un émetteur-récepteur cellulaire destiné à communiquer avec le réseau cellulaire.

12. Procédé de communication mobile sans fil comprenant les étapes consistant à :
lancer une demande d'enregistrement afin d'enregistrer un dispositif de communication mobile sans fil (33) auprès d'un réseau de communication sans fil particulier (32) parmi une pluralité de réseaux de communication sans fil différents et recevoir au moins un annuaire de services ;
déteminer un répertoire d'opérateur sur le serveur d'applications pour le réseau de communication sans fil particulier, en fonction dudit au moins un annuaire de services, le serveur d'applications étant configuré pour fournir une pluralité d'applications pour dispositifs mobiles ;
déterminer dans le répertoire d'opérateur au moins une application pour dispositifs mobiles qui est marquée comme obligatoire ; et
télécharger ladite au moins une application obligatoire pour dispositifs mobiles à partir du répertoire d'opérateur sur ledit serveur d'applications vers le dispositif de communication mobile sans fil, via le réseau de communication sans fil, et installer ladite au moins une application obligatoire pour dispositifs mobiles en tâche de fond après enregistrement et sans message d'invite à l'utilisateur ou acceptation par l'utilisateur.

13. Procédé selon la revendication 12, comprenant en outre l'étape consistant à enregistrer un indicateur d'installation initiale sur le dispositif de communication mobile sans fil (33) pour ladite au moins une application obligatoire pour dispositifs mobiles.

14. Procédé selon la revendication 13, comprenant en outre l'étape consistant à déterminer si l'indicateur d'installation initiale est enregistré avant de télécharger et d'installer ladite au moins une application obligatoire pour dispositifs mobiles.

15. Procédé selon la revendication 13, dans lequel au moins l'une des applications pour dispositifs mobiles n'est pas marquée comme obligatoire, et comprenant en outre l'étape consistant à télécharger et installer sélectivement ladite application non obligatoire pour dispositifs mobiles à partir du répertoire d'opérateur sur le serveur d'applications (31), à destination du dispositif de communication mobile sans fil (33), en tâche de premier plan, en fonction d'un message d'invite adressé à l'utilisateur et d'une acceptation par l'utilisateur.
